# EUROPÄISCHE PATENTSCHRIFT

(11) **EP 3 201 043 B1**
(45) Veröffentlichungstag und Bekanntmachung des Hinweises auf die Patenterteilung: **11.11.2020**
(21) Anmeldenummer: 15771129.2
(22) Anmeldetag: 30.09.2015
(51) Int. Cl.: B60N 2/22, B60N 2/30, B60N 2/06, B60N 2/75, B60N 2/20

(54) **AUTOMATISCH EINSTELLBARE MITTELARMLEHNE, INSBESONDERE FÜR DIVE-DOWN-FAHRZEUGSITZE BEZIEHUNGSWEISE SITZANLAGEN**
AUTOMATICALLY ADJUSTABLE CENTRAL ARMREST, IN PARTICULAR FOR DIVE-DOWN TYPE VEHICLE SEATS, RESPECTIVELY SEAT DEVICES
ACCOUDOIR CENTRAL RÉGLABLE AUTOMATIQUEMENT, EN PARTICULIER POUR SIÈGES DE VÉHICULE DE TYPE "DIVE-DOWN", RESPECTIVEMENENT SYSTÈMES DE SIÈGE

(30) Priorität: 01.10.2014 DE 102014219887
(43) Veröffentlichungstag der Anmeldung: 09.08.2017
(73) Patentinhaber: Volkswagen Aktiengesellschaft, 38440 Wolfsburg (DE)
(72) Erfinder: SZLAG, Robert, 38440 Wolfsburg (DE)
(86) Internationale Anmeldenummer: PCT/EP2015/072528
(87) Internationale Veröffentlichungsnummer: WO 2016/050827

(56) Entgegenhaltungen:
- DE-A1- 3 814 758
- DE-A1- 10 316 731
- US-A1- 2014 225 410

## Beschreibung

Die Erfindung betrifft einen Fahrzeugsitz oder eine Sitzbank umfassend mindestens ein gegenüber mindestens einem Sitzteil aus einer Ausgangsposition reversibel in eine Komfortposition neigungsverstellbares Rückenlehnenteil an dem mindestens eine Armlehne und/oder Mittelarmlehne angeordnet ist, die in der Ausgangsposition des mindestens einen Rückenlehnenteiles in einer im Wesentlichen horizontalen Position angeordnet ist.

Fahrzeugsitze weisen zumeist eine Armlehne auf, während Sitzanlagen zumeist eine Mittelarmlehne aufweisen.

Die Funktion der Überführung eines Fahrzeugsitzes beziehungsweise aus mehreren Fahrzeugsitzen gebildeten Sitzanlagen von der zur Personenbeförderung geeigneten Gebrauchsposition in eine nicht zur Personenbeförderung geeigneten Position, insbesondere in eine Ladeposition, wird auch als "Dive-Down"-Funktion bezeichnet. Die zugehörigen Sitzanlagen werden analog dazu als "Dive-Down"-Sitzanlagen bezeichnet, weil sie platzsparend aus der Gebrauchsposition zur Personenbeförderung in eine Nichtgebrauchsposition abtauchen. Bei Sitzanlagen deren Rückenlehnenteil neigungsverstellbar ist, wie es insbesondere bei den "Dive-Down"-Sitzanlagen der Fall ist, kommt das Problem auf, dass die Mittelarmlehne in einer Ausgangsposition im Wesentlichen horizontal angeordnet ist, während die Mittelarmlehne sobald das Rückenlehnenteil neigungsverstellt wird, aus der im Wesentlichen komfortablen horizontalen Ausgangsposition in eine weniger komfortable Verstelllage kommt. Die Mittelarmlehne ist dann nicht mehr im Wesentlichen horizontal angeordnet, sondern ist bei einer Neigungsverstellung des Rückenlehnenteil nach hinten - schräg nach oben - und bei einer Neigungsverstellung nach vorn - schräg nach unten - angeordnet. Diese Schräglage wird von dem Benutzer als unkomfortabel empfunden. Diese Problematik trifft auch für Armlehnen an einem Fahrzeugsitz zu, sobald das zugehörige Rückenlehnenteil neigungsverstellbar beziehungsweise in seiner Neigung verstellt ist.

Aus der Druckschrift DE 10 2007 050 967 A1 ist beispielsweise ein Sitz mit einem Sitzteil und einem Rückenlehnenteil und mindestens einer Armlehne und mindestens einem plattenförmigen Tischelement bekannt. Das Tischelement ist aus einer im Wesentlichen vertikal ausgerichteten, Nichtgebrauchsposition in/an der Armlehne in eine im Wesentlichen horizontale Gebrauchsposition überführbar. Interessant dabei ist eine Kulissenführung in/an der Armlehne über die das klappbare Tischelement von der Nichtgebrauchsposition in die Gebrauchsposition und zurückgeführt wird.

Aus den Druckschriften DE 38 14 758 A1 und US 2014/0225410 A1 sind Fahrzeugsitze bekannt, deren rückenlehnenseitig angeordnete Mittelarmlehnen in einer horizontalen Gebrauchsposition verbleiben, sobald das Rückenlehnenteil in seiner Neigung verstellt wird.

Der Erfindung liegt die Aufgabe zugrunde, für eine Armlehne eines Fahrzeugsitzes oder für eine Mittelarmlehne einer Sitzanlage für eine bei der Neigungsverstellung des Rückenlehnenteiles kinematisch an die veränderte Neigung des Rückenlehnenteiles angepasste Einstellung der Armlehne beziehungsweise Mittelarmlehne zu sorgen.

Ausgangspunkt der Erfindung ist ein Fahrzeugsitz oder eine Sitzbank, umfassend mindestens ein gegenüber mindestens einem Sitzteil aus einer Ausgangsposition reversibel in eine Komfortposition neigungsverstellbares Rückenlehnenteil, an dem mindestens eine Armlehne angeordnet ist, die in der Ausgangsposition des mindestens einen Rückenlehnenteiles in einer im Wesentlichen horizontalen Position angeordnet ist, wobei dem mindestens einen neigungsverstellbaren Rückenlehnenteil ein zumindest während der Neigungsverstellung lagestabiles, indirekt oder direkt mit einer Karosserie in Verbindung stehendes Auslöseelement zugeordnet ist, welches auf einen zwischen dem mindestens einen Rückenlehnenteil und der mindestens einen Armlehne angeordneten Synchronisationsmechanismus wirkt.

Dabei ist vorgesehen, dass der Synchronisationsmechanismus während der reversiblen Neigungsverstellung des mindestens einen Rückenlehnenteiles von der Ausgangsposition in die Komfortposition eine unveränderte horizontale Position der Armlehne um eine Mittelarmlehnenschwenkachse bewirkt, wobei die Armlehne über die Mittelarmlehnenschwenkachse von einer in dem mindestens einen Rückenlehnenteil versenkten Verstelllage in die horizontale Verstelllage schwenkbar ist, bei der sich die Armlehne in der horizontalen Position befindet.

Der Synchronisationsmechanismus bewirkt somit während der reversiblen Neigungsverstellung des mindestens einen Rückenlehnenteiles von der Ausgangsposition in die Komfortposition eine unveränderte horizontale Position der Armlehne. Der Synchronisationsmechanismus stellt einen dem Fahrzeugsitz oder einer Sitzbank nach Bedarf zuordenbaren Mechanismus dar. Es wird in vorteilhafter Weise sichergestellt, dass die Armlehne eines Fahrzeugsitzes oder einer Sitzbank oder die Mittelarmlehne einer Sitzbank bei jeder Neigung des zugehörigen Rückenlehnenteiles stets eine im Wesentlichen horizontale Position aufweist.

Im Ausführungsbeispiel wird stellvertretend für die prinzipiell gefundene technische Lösung eine Hintersitzanlage erläutert, die eine Mittelarmlehne aufweist. Ferner wird erläutert, dass die gefundene technische Lösung besonderes dazu geeignet ist, auf einfache Weise in die sogenannten "Dive-Down"-Sitzanlagen integriert zu werden.

Die Funktion und der grundsätzliche Aufbau werden zum Verständnis ebenfalls erläutert.

Erfindungsgemäß ist vorgesehen, dass das Auslöseelement einen Mitnehmer aufweist, der in der Ausgangsposition des mindestens einen Rückenlehnenteiles mit seiner Mitnehmerflanke an einem Klinkenbolzen einer Klinke angreift. Die Klinke ist drehbeweglich an einem Lehnenholm des mindestens einen Rückenlehnenteiles angeordnet. Die Klinke steht mit einem Ende eines Übertragungselementes drehbeweglich in Verbindung. Das Übertragungselement wiederum ist mit seinem anderen Ende mit einem drehbeweglich an dem Lehnenholm des mindestens einen Rückenlehnenteiles angeordneten Anschlag drehbeweglich verbunden. Der Anschlag weist eine Anschlagskulisse auf, in der ein Endanschlagselement der Armlehne anschlägt und die Armlehne in der Ausgangsposition des mindestens einen Rückenlehnenteiles in der horizontalen Position hält. Durch diese kinematische Lösung ist zunächst sicher gestellt, dass die Armlehne in der Ausgangsposition des Rückenlehnenteiles in der im Wesentlichen horizontalen Position gehalten ist.

Die Armlehne ihrerseits ist über ein Halteelement an der Struktur des mindestens einen Rückenlehnenteiles gehalten. Das Halteelement weist eine Halteelementkulisse auf, in der das Endanschlagselement der Armlehne anschlägt und die Armlehne in der Komfortposition des mindestens einen Rückenlehnenteiles in der horizontalen Position hält.

Die Ausgangsposition und die Komfortposition des Rückenlehnenteiles eines Fahrzeugsitzes oder einer Sitzbank sind im Beschreibungsteil beispielhaft festgelegt und im Detail erläutert.

In bevorzugter Ausgestaltung der Erfindung ist es vorgesehen, dass das Endanschlagselement der Armlehne aus der Anschlagskulisse in die Halteelementkulisse kommt, sobald der Mitnehmer des lagestabilen Auslöseelementes, bei der Relativbewegung des mindestens einen Rückenlehnenteiles gegenüber dem Mitnehmer des lagestabilen Auslöseelementes über den Klinkenbolzen für eine Drehbewegung der Klinke und gleichzeitig für eine translatorische Bewegung des Übertragungselementes sorgt. Das Übertragungselement ruft eine Drehbewegung des Anschlages hervor. Die Anschlagskulisse des Anschlages gibt das Endanschlagselement, durch die Drehbewegung des Anschlages bedingt, langsam in Richtung der Halteelementkulisse des Halteelementes frei, wodurch das Endanschlagselement der Armlehne in der Komfortposition des Rückenlehnenteiles schließlich in die Halteelementkulisse des Halteelementes eingreift. Der Eingriff des Endanschlagselementes der Armlehne in die Halteelementkulisse des Halteelementes stellt die Endposition der Armlehne dar. Diese Endposition wird erreicht, sobald sich das Rückenlehnenteil in der Komfortposition befindet. Die Bewegungen des Rückenlehnenteiles und der Armlehne sind über den Synchronisationsmechanismus entsprechend abgestimmt, das heißt Synchronisiert, so dass in jeder Position des Rückenlehnenteiles zwischen der Ausgangsposition und der Komfortposition in vorteilhafter Weise stets eine horizontale Lage der Armlehne bewirkt wird.

In bevorzugter Ausgestaltung der Erfindung sind die Klinke, das Übertragungselement, der Anschlag und das Halteelement auf der Innenseite des seitlichen Lehnenholmes der Struktur des mindestens einen Rückenlehnenteiles angeordnet.

Demgegenüber ist in bevorzugter Ausgestaltung der Erfindung vorgesehen, dass das Auslöseelement mit dem Mitnehmer auf der Außenseite des seitlichen Lehnenholmes der Struktur des mindestens einen Rückenlehnenteiles angeordnet ist.

Im Detail ist bevorzugt vorgesehen, dass die Klinke einen Klinkenbolzen aufweist, der den seitlichen Lehnenholm der Struktur des mindestens einen Rückenlehnenteiles quer zur Richtung der Neigungsverstellung des Rückenlehnenteiles durchgreift.

Der Durchtritt durch den Lehnenholm ist als Durchtrittsöffnung in der Art eines Langloches ausgestaltet. Die Durchtrittsöffnung liegt somit in einer Wandung des Lehnenholmes.

Hierdurch wird erreicht, dass bei der reversiblen Neigungsverstellung des mindestens einen Rückenlehnenteiles eine Bewegung des durch die Durchtrittsöffnung geführten Klinkenbolzens der Klinke von einem Endanschlag zu einem gegenüberliegenden Endanschlag erlaubt ist, wobei der jeweilige Anschlag durch die vorgebbare Länge des Langloches einmal der Ausgangsposition und einmal der Komfortposition des mindestens einen Rückenlehnenteiles entspricht, so dass die Bewegung des Klinkenbolzens der Klinke über den Mitnehmer a) für eine Synchronisierte Drehbewegung der Klinke, b) für eine Synchronisierte translatorische Bewegung des Übertragungselementes, und c) für eine Synchronisierte Drehbewegung des Anschlages sorgt, dessen Anschlagskulisse das Endanschlagselement der Armlehne durch die Drehbewegung des Anschlages sukzessiv gegenüber der Halteelementkulisse des Halteelementes frei gibt, wodurch das Endanschlagselement der Armlehne Synchron mit dem Erreichen der Komfortposition des mindestens einen Rückenlehnenteiles schließlich endgültig in die Halteelementkulisse des Halteelementes eingreift.

In Kombination mit den erwähnten "Dive-Down"-Sitzanlagen ist vorgesehen, dass das Auslöseelement ein Koppelelement in der Art einer Schwinge eines Verstellmechanismus einer Verstellkinematik ist, bei dem die Schwinge zwischen dem Rückenlehnenteil und dem karosseriefesten Sitzteil drehbeweglich an dem mindestens einen Rückenlehnenteil angeordnet ist. Dabei ist vorgesehen, dass die Schwinge unabhängig von der reversiblen Neigungsverstellung des mindestens einen Rückenlehnenteiles von der Ausgangsposition in die Komfortposition zwangsgekoppelt eine reversible Verstellbewegung des mindestens einen Rückenlehnenteiles auf das karosseriefeste Sitzteil überträgt.

Die Schwinge ist einerseits drehbar über eine Drehachse an der Rückenlehnenstruktur des Rückenlehnenteiles angeordnet. Andererseits ist die Schwinge an geeigneter Stelle fest mit einer Struktur des Sitzteiles des Fahrzeugsitzes verbunden. Die Schwinge steht somit während der Neigungsverstellung des Rückenlehnenteiles von der Ausgangsposition in die Komfortposition indirekt über das Sitzteil lagefest mit der Karosserie in Verbindung. Bei der Neigungsverstellung des Rückenlehnenteiles dreht sich das Rückenlehnenteil um die Schwingendrehachse, während die Schwinge selbst ihre Position nicht ändert. Es findet somit eine Relativbewegung des Rückenlehnenteiles gegenüber der Schwinge statt. Endseitig der Schwinge ist der Mitnehmer angeordnet, der auf den Klinkenbolzen der Klinke wirkt, sobald von der Ausgangsposition in die Komfortposition neigungsverstellt wird. Umgekehrt wirkt der Klinkenbolzen der Klinke auf den Mitnehmer der Schwinge, sobald das Rückenlehnenteil von der Komfortposition in die Ausgangsposition neigungsverstellt wird.

Die mindestens eine Schwinge übernimmt somit erstens die Zwangskopplung zwischen dem Rückenlehnenteil und dem Sitzteil bei einer Klappung des Rückenlehnenteiles - nach vorn in Fahrtrichtung - aus der Ausgangsposition des Fahrzeugsitzes in die Cargoposition des Fahrzeugsitzes. Die Schwinge steuert das Sitzteil bei einer Klappung des Rückenlehnenteiles zwangsgesteuert von der Ausgangsposition des Fahrzeugsitzes in die Cargoposition des Fahrzeugsitzes.

Zweitens übernimmt die mindestens eine Schwinge mit ihrem Mitnehmer als Auslöseelement des Synchronisationsmechanismus die Synchronisation der Mittelarmlehne, das heißt die Anpassung der Ausgangsposition der Mittelarmlehne an eine veränderliche Position des Rückenlehnenteiles, bei einer Klappung des Rückenlehnenteiles - nach hinten entgegen der Fahrtrichtung - aus der Ausgangsposition des Fahrzeugsitzes in die Komfortposition des Fahrzeugsitzes und umgekehrt.

In der Komfortposition ist das Rückenlehnenteil gegenüber dem Sitzteil weiter nach hinten geklappt, als in der Ausgangsposition. Beispielsweise ist das Rückenlehnenteil gegenüber einer gedachten Vertikalen in der Ausgangsposition um etwa 25° nach hinten geneigt, während es in der Komfortposition um etwa 35° nach hinten geneigt ist. Anders gesagt, gegenüber einem die Position beibehaltenden im Wesentlichen horizontalen Sitzteil liegt zwischen dem Rückenlehnenteil in der Ausgangsposition und dem Sitzteil ein Winkel von etwa 115° und zwischen dem Rückenlehnenteil in der Komfortposition und dem Sitzteil ein Winkel von etwa 125°.

Der Verstellmechanismus der die Schwinge umfassenden "Dive-Down"-Sitzanlagen zeichnet sich dadurch aus, dass er insbesondere ein Easy-Entry-Verstellmechanismus eines Fahrzeugsitzes oder eines Fahrzeugsitzes innerhalb einer mehrteiligen Sitzbank oder einer ungeteilten Sitzbank ist, der insbesondere zum erleichterten Einstieg in einen Innenraum eines Kraftfahrzeuges dient, wobei das Rückenlehnenteil des Fahrzeugsitzes/der Sitzbank zur Durchführung eines ersten Schrittes eine Rückenlehnenentriegelungseinheit aufweist, durch die das Rückenlehnenteil des Fahrzeugsitzes/der Sitzbank entriegelbar ist und gegenüber dem Sitzteil des Fahrzeugsitzes/der Sitzbank in eine vorgebbare dem Sitzteil näher kommende Klappstellung bringbar ist.

Der Verstellmechanismus arbeitet unabhängig von dem Synchronisationsmechanismus. Das Bindeglied zwischen den beiden Mechanismen ist die Schwinge, die einmal als Koppelelement und ein anderes Mal als Auslöseelement fungiert.

Bei den "Dive-Down"-Sitzanlagen wirkt die Rückenlehnenentriegelungseinheit zur Durchführung eines zweiten Schrittes, bei dem eine erste Verstellbewegung des Fahrzeugsitzes/der Sitzbank durchgeführt wird, in Klappstellung des Fahrzeugsitzes/der Sitzbank entriegelnd auf eine Schlittenentriegelungseinheit eines den Fahrzeugsitz/die Sitzbank tragenden Schlittens ein.

Der Fahrzeugsitz/die Sitzbank wird durch den Schlitten um einen ersten Verstellweg horizontal verschoben und das Sitzteil über mindestens einen im vorderen Bereich des Sitzteiles angeordneten Schwenkarm innerhalb der ersten Verstellbewegung jeweils um einen vorgebbaren vertikalen Verstellweg vertikal nach unten bewegt, wobei der Schlitten anschließend auf eine Sitzschienenentriegelungseinheit einer den Schlitten tragenden Sitzschiene entriegelnd einwirkt, so dass der Fahrzeugsitz/die Sitzbank auf der Sitzschiene in einem dritten Schritt nach der ersten Verstellbewegung in einer zweiten Verstellbewegung gleichgerichtet um einen weiteren horizontalen zweiten Verstellweg weiter bewegbar ist.

Die Easy-Entry-Verstellkinematik der "Dive-Down"-Funktion für einen Fahrzeugsitz oder für einen Fahrzeugsitz innerhalb einer mehrteiligen Sitzbank oder für eine ungeteilte Sitzbank, insbesondere zum erleichterten Einstieg in einen Innenraum eines Kraftfahrzeuges, zeichnet sich dadurch aus, dass
- in einem ersten Schritt ein Rückenlehnenteil des Fahrzeugsitzes/der Sitzbank entriegelt und gegenüber dem Sitzteil des Fahrzeugsitzes/der Sitzbank in eine vorgebbare dem Sitzteil näher kommende Klappstellung gebracht wird, und
- in einem zweiten Schritt eine erste Verstellbewegung des Fahrzeugsitzes/der Sitzbank durchgeführt wird, bei der der Fahrzeugsitz/die Sitzbank um einen ersten Verstellweg horizontal verschoben und das Sitzteil innerhalb der ersten Verstellbewegung um jeweils einen vorgebbaren vertikalen Verstellweg vertikal nach unten bewegt wird, wonach der Fahrzeugsitz/die Sitzbank
- in einem dritten Schritt nach der ersten Verstellbewegung in einer zweiten Verstellbewegung gleichgerichtet um einen weiteren horizontalen zweiten Verstellweg weiter bewegt wird.

Die bekannte Kinematik der Easy-Entry-Funktion ist mit der Kinematik der "Dive-Down"-Funktion gekoppelt. Infolgedessen erlaubt die vorliegende Erfindung vorteilhafterweise einen einfacheren Einstieg in den Innenraum eines Fahrzeuges und insbesondere in eine hinter dem mit dem erfindungsgemäßen Verstellmechanismus beziehungsweise mit der erfindungsgemäßen Verstellkinematik ausgestatteten Fahrzeugsitz/Sitzbank gelegenen Sitzreihe.

Bei der Verschiebung über den ersten Verstellweg findet gleichzeitig eine Absenkung des Sitzteiles statt. Bereits durch diese überlagerten Verstellbewegungen in x-Richtung und y-Richtung wird in vorteilhafter Weise ein vergrößerter Einstiegsraum zum Einstieg in den Innenraum eines Kraftfahrzeuges erzeugt. Zur Realisierung dieser überlagerten Verstellbewegungen wurde das Sitzteil nahe des vorderen Bereiches des Sitzteiles über die Schwenkarme drehbar auf der Sitzoberschiene der Sitzschiene angekoppelt. Die Ankopplung des Sitzteiles im hinteren Bereich an das Rückenlehnenteil über die Schwinge wurde bereits erläutert.

Die Ankopplung des Sitzteiles im hinteren Bereich des Sitzteiles an das Rückenlehnenteil über die Schwinge ermöglicht in dem ersten Schritt die Übertragung der Verstellbewegung des Rückenlehnenteiles auf das Sitzteil.

Schließlich zeichnet sich der Verstellmechanismus dadurch aus, dass im vorderen Bereich der Sitzschiene ein Entriegelungselement angeordnet ist, welches mittelbar oder unmittelbar an einem Entriegelungsbügel einer Sitzschienenentriegelungseinheit angreift.

Im Wesentlichen stößt am Ende der zweiten horizontalen Verstellbewegung der Oberschlitten in seiner im Wesentlichen vordersten Position an dem Entriegelungselement an. Diese technische Maßnahme stellt eine einfache und sichere Entriegelung der Sitzoberschiene gegenüber der Sitzunterschiene dar. Durch das Anstoßen des Oberschlittens an dem Entriegelungselement erfolgt eine Betätigung des Entriegelungsbügels und somit eine Entriegelung der Sitzoberschiene gegenüber der Sitzunterschiene. Da die Sitzoberschiene den Unterschlitten trägt, wird der Fahrzeugsitz in vorteilhafter Weise über die sich gegenüber der Sitzunterschiene verlagernde Sitzoberschiene in dem dritten Schritt um den zweiten Verstellweg noch weiter nach vorne verfahren, so dass der Fahrzeugsitz/die Sitzbank ein weiteres Mal horizontal weiter in x-Richtung verschiebbar ist.

Dadurch wird in vorteilhafter Weise ein noch weiterer vergrößerter Einstiegsraum zum Einstieg in den Innenraum eines Kraftfahrzeuges erzeugt.

Durch die Kombination aus Verstellmechanismus des Fahrzeugsitzes beziehungsweise der Sitzbank und dem Synchronisationsmechanismus der Armlehne/Mittelarmlehne ergibt sich für die erläuterte "Dive-Down"-Sitzanlage eine weitere Funktion, nämlich die Synchronisierungs-Funktion der Position Armlehne in Abhängigkeit der Neigung des/der Rückenlehnenteiles/e.

Die Funktionen des Fahrzeugsitzes oder Sitzbank zusammengefasst:
- Easy-Entry-Funktion des Fahrzeugsitzes/der Sitzbank
- Dive-Down-Funktion des Fahrzeugsitzes/der Sitzbank
- Synchronisierungs-Funktion der Armlehne eines Fahrzeugsitzes/der Sitzbank

Die Erfindung wird nachfolgend in Ausführungsbeispielen anhand der zugehörigen Zeichnungen erläutert. Es zeigen:
- Figur 1: einen Fahrzeugsitz in einer Seitenansicht in Ausgangslage;
- Figur 2: den Fahrzeugsitz mit einer Easy-Entry-Klappung des Rückenlehnenteiles nach einem ersten Schritt innerhalb der Easy-Entry-Klappung;
- Figur 3-1: den Fahrzeugsitz in Ausgangslage gemäß Figur 1 in einer sequenziellen Figurenfolge zur Verdeutlichung der Easy-Entry-Verstellkinematik;
- Figur 3-2: den Fahrzeugsitz mit einer Easy-Entry-Klappung des Rückenlehnenteiles gemäß Figur 2 in der sequenziellen Figurenfolge zur Verdeutlichung der Easy-Entry-Verstellkinematik;
- Figur 3-3: den Fahrzeugsitz nach einer ersten Verstellbewegung des Fahrzeugsitzes in der sequenziellen Figurenfolge zur Verdeutlichung der Easy-Entry-Verstellkinematik;

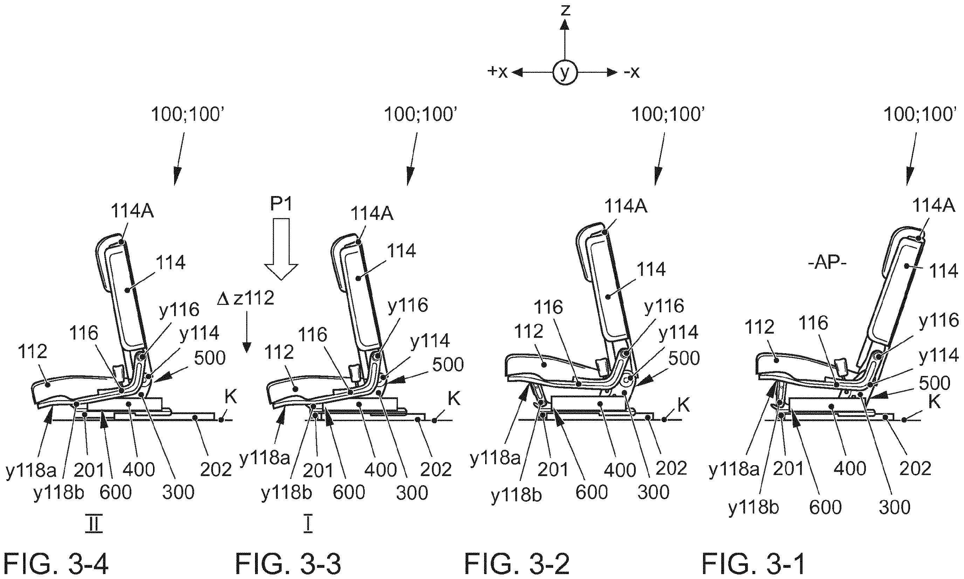

- Figur 3-4: den Fahrzeugsitz nach einer zweiten Verstellbewegung des Fahrzeugsitzes in der sequenziellen Figurenfolge zur Verdeutlichung der Easy-Entry-Verstellkinematik;

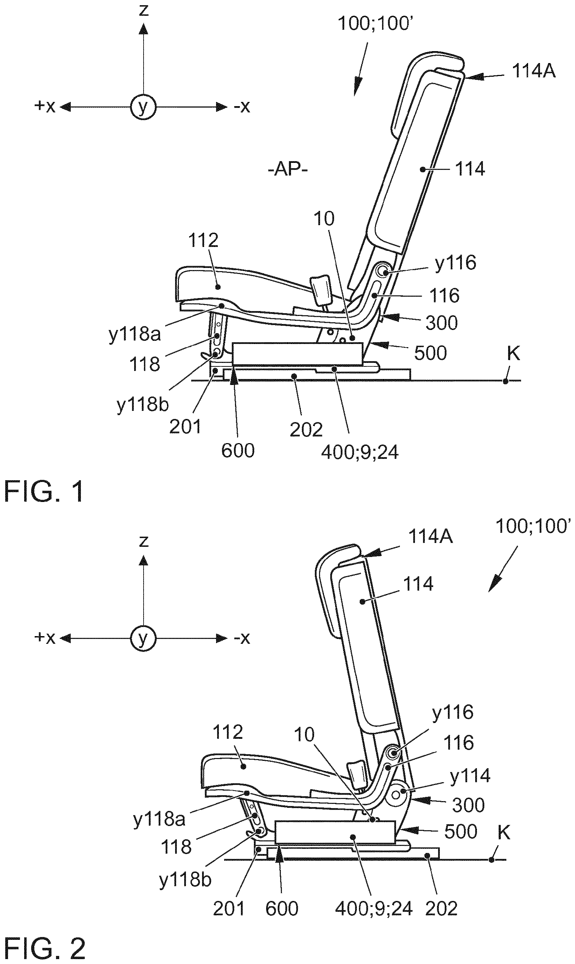

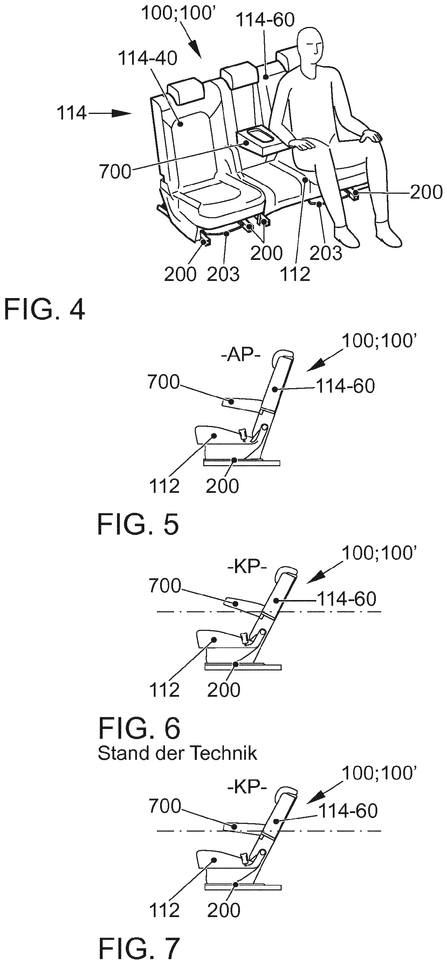

- Figur 4: eine Hintersitzanlage mit einer Mittelarmlehne, die mit der in den Figuren 1 bis 3-4 dargestellt Verstellkinematik ausgestattet ist;
- Figur 5: die Mittelarmlehne gemäß Figur 4 in einer Ausgangsposition;
- Figur 6: die Mittelarmlehne gemäß Figur 4 in einer unerwünschten Verstelllage nach der Neigungsverstellung des Rückenlehnenteiles in eine Komfortposition;
- Figur 7: die erfindungsgemäße Mittelarmlehne gemäß Figur 4 in einer erwünschten mit der Neigungsverstellung Synchronisierten Verstelllage nach der Neigungsverstellung des Rückenlehnenteiles in die Komfortposition;

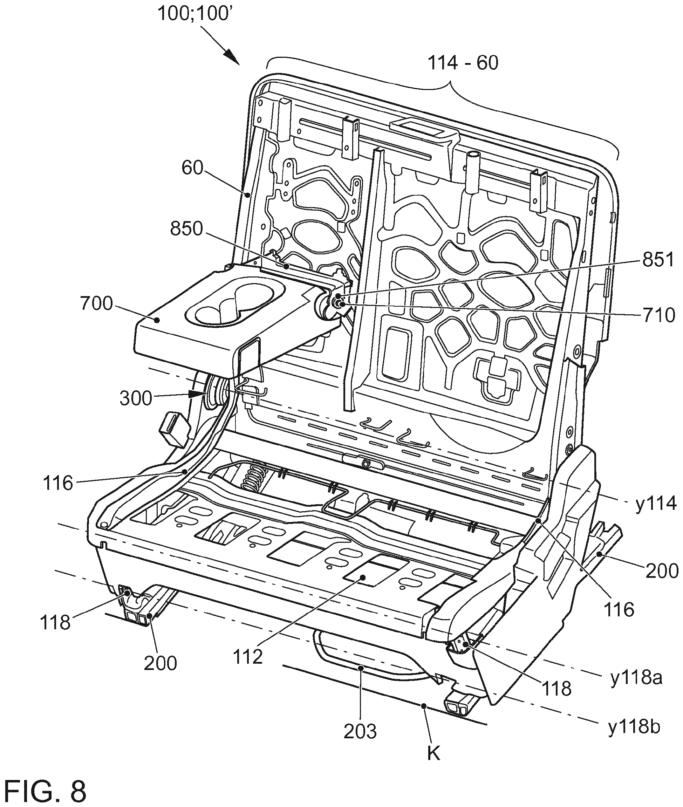

- Figur 8: ein Zweidrittel-Rückenlehnenteil der Hintersitzanlage mit der Mittelarmlehne gemäß Figur 7;

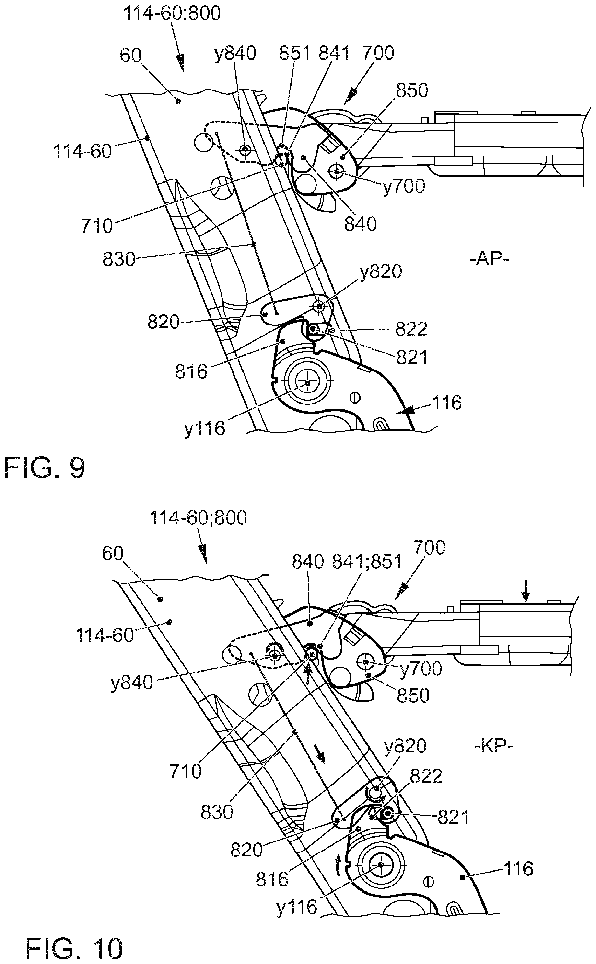

- Figur 9: ein Synchronisationsmechanismus der Mittelarmlehne des Rückenlehnenteiles in der Ausgangsposition;
- Figur 10: den Synchronisationsmechanismus der Mittelarmlehne des Rückenlehnenteiles in der Komfortposition.

Die Erfindung wird nachfolgend erläutert. Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Figur 1 zeigt einen Fahrzeugsitz 100 in einer Seitenansicht. Diese Seitenansicht des Fahrzeugsitzes 100 ist auch stellvertretend für eine geteilte oder ungeteilte Sitzbank 100' dargestellt, die ebenfalls die Ausgestaltungen und die Funktionen des nachfolgend beschriebenen Fahrzeugsitzes 100 aufweisen beziehungsweise ausführen kann.

Der Fahrzeugsitz 100 umfasst ein Sitzteil 112 und ein Rückenlehnenteil 114.

Die Rückenlehnenteilstruktur des Rückenlehnenteiles 114 ist über mindestens ein Koppelelement, insbesondere eine Schwinge 116 mit der Sitzteilstruktur des Sitzteiles 112 verbunden.

Die mindestens eine Schwinge 116 ist einerseits drehbar über eine Schwingendrehachse y116 an der Rückenlehnenstruktur des Rückenlehnenteiles 114 angeordnet.

Die mindestens eine Schwinge 116 ist andererseits fest mit der Sitzteilstruktur des Sitzteiles 112 verbunden.

Der Fahrzeugsitz 100 weist einen Beschlag auf, der Teil eines Drehverstellers ist. Ein Beschlagteil des Beschlages ist an dem Rückenlehnenteil 114 angeordnet.

Das rückenlehnenseitige Beschlagteil ist gegenüber dem anderen Beschlagteil verschwenkbar, so dass die Neigungsverstellung des Rückenlehnenteiles 114 gegenüber dem Sitzteil 112 durchführbar ist. Durch die Zwangskopplung des Rückenlehnenteiles 114 mit dem Sitzteil 112 über die Schwinge 116 bewegt sich das Sitzteil 112 bei der Verstellbewegung des Rückenlehnenteiles 114 stets mit.

Durch Betätigung eines nicht näher dargestellten Verstellgliedes des Drehverstellers wird das Rückenlehnenteil 114 je nach Drehbewegung des Verstellgliedes am Drehversteller zur Neigungsverstellung des Rückenlehnenteiles 114 gegenüber dem Sitzteil 112 um die Lehnendrehachse y114 drehbeweglich nach vorne und nach hinten bewegt.

### Komforteinstellung:

Der Beschlag des Fahrzeugsitzes 100 oder der Sitzbank 100' ermöglicht somit eine Komforteinstellung, bei der das Rückenlehnenteil 114 des Fahrzeugsitzes 100 zur Neigungsverstellung des Rückenlehnenteiles 114 beziehungsweise die Sitzbank 100' durch Betätigung des Verstellgliedes nach vorn +x-Richtung und nach hinten -x-Richtung schwenkbar ist.

Zumeist sind an den Beschlägen des Beschlages des Drehverstellers Anschläge vorgesehen, die den Verstellbereich des Rückenlehnenteiles 114 relativ zu dem Sitzteil 112 beidseitig begrenzen.

Die Auslegung des Verstellbereiches des Rückenlehnenteiles 114 erfolgt zumeist derart, dass eine Ausgangsposition AP (Ausgangslage) an einem vorderen Anschlag definiert wird. Das Rückenlehnenteil 114 kann von der Ausgangsposition AP (Ausgangslage) nach hinten -x-Richtung in eine Komfortposition KP (Komfortlage) bis zu einem hinteren Anschlag neigungsverstellt werden.

Theoretisch haben die Drehversteller 116 einen Verstellbereich von 360°, der aber typischerweise durch Gegebenheiten innerhalb des Fahrzeuges begrenzt wird. Zweckmäßig wird der Verstellbereich des Fahrzeugsitzes 100 beziehungsweise der Sitzbank 100' in der ersten Reihe anders gewählt als bei dem Fahrzeugsitz 100 oder der Sitzbank 100' in einer hinter der ersten Sitzreihe liegenden zweiten oder dritten Sitzreihe.

### Easy-Entry-Einstellung nach dem Stand der Technik:

Der prinzipiell beschriebene Aufbau des Beschlages ermöglicht eine Easy-Entry-Einstellung, bei der es bisher funktionell zur Entriegelung der Beschlagteile und parallel oder kurz nachfolgend zur Entriegelung einer Oberschiene 201 gegenüber einer Unterschiene 202 kommt, wobei das Rückenlehnenteil 114 in Richtung des Sitzteiles 112 in eine gewünschte Position klappbar ist und der so geklappte Fahrzeugsitz 100 insgesamt über die Sitzschienen 200 reversibel nach vorne fahrbar ist, indem die Oberschiene 201 auf der Unterschiene 202 reversibel nach vorne gleitet.

Die Easy-Entry-Einstellung wird üblicherweise durch Betätigung eines Entriegelungselementes 114A vorgenommen, wobei das Entriegelungselement 114A wegen der besseren Zugänglichkeit zumeist, wie in den Figuren dargestellt, im oberen Bereich des Rückenlehnenteiles 114 angeordnet ist.

Bei der Easy-Entry-Funktion gleitet der Fahrzeugsitz 100 beziehungsweise eine Sitzbank 100' auf der Oberschiene 201 reversibel nach vorne und sorgt je nach Ausführung der Easy-Entry-Funktion in einer ersten oder zweiten Sitzreihe für einen breiteren Einstieg in die zweite oder eine dritte Sitzreihe.

Durch die herkömmliche Easy-Entry-Funktion wird das Einsteigen für die in die zweite und/oder dritte Sitzreihe einsteigenden Personen bereits leichter gemacht. Der Fahrzeugsitz 100 oder die Sitzbank 100' lässt sich mit geringem Kraftaufwand nach vorne schieben beziehungsweise das Rückenlehnenteil 114 lässt sich leicht reversibel auf das Sitzteil 112 umklappen.

### Neue Easy-Entry-Slide-Dive-Down-Funktion:

Erfindungsgemäß wird die beschriebene bekannte Kinematik der Easy-Entry-Funktion mit der vorne beschriebenen Kinematik der Dive-Down-Funktion gekoppelt.

Neben der Kopplung dieser Funktionen wird eine weitere Verbesserung vorgenommen, die den Einstiegsbereich gegenüber dem Stand der Technik noch weiter vergrößert. Die Verbesserung liegt kurz gesagt darin, dass das Rückenlehnenteil 114 des Fahrzeugsitzes 100 in einem ersten Schritt, wie bisher bei der herkömmlichen "Easy-Entry"-Funktion gegenüber dem Sitzteil 112 geklappt wird, sich jedoch an diesen bekannten Schritt zwei reversibel in +x-Richtung (Fahrtrichtung) stattfindende Verschiebeschritte des Fahrzeugsitzes 100 anschließen.

An den ersten Schritt schließen sich zwei Verschiebungen "Slide" des Fahrzeugsitzes 100 nach vorne in Fahrtrichtung +x-Richtung an, wobei in dem ersten der beiden Verschiebeschritte der Fahrzeugsitz 100 analog der "Dive-Down"-Funktion um einen im Wesentlichen vertikalen Verstellweg nach unten abgesenkt wird.

Die gemäß der Erfindung entwickelte Funktionalität wird insbesondere durch einen zusätzlich angeordneten Schlitten 400 auf der jeweiligen Sitzschiene 200 und weitere darauf basierende strukturelle und funktionale Änderungen realisiert.

Es tritt der Effekt ein, dass der Fahrzeugsitz 100 beziehungsweise die Sitzbank 100' erfindungsgemäß nicht nur nach vorne in die bekannte Easy-Entry-Position bewegt wird, sondern es findet eine reversible Verstellbewegung des Fahrzeugsitzes 100 insgesamt beziehungsweise der Sitzbank 100' in zwei Schritten (in einem zweiten und einem dritten Schritt) sehr weit nach vorne +/-x-Richtung (weiter nach vorne in +x-Richtung als im Stand der Technik) und nach unten +/-z-Richtung statt, wodurch in vorteilhafter Weise der Einstiegsbereich größer und damit der Zugang zum Innenraum des Kraftfahrzeugs gegenüber dem Stand der Technik zugänglicher, das heißt noch komfortabler wird.

Es wurde zur Realisierung der beschriebenen Funktionalität eine vorteilhafte Verstellkinematik entwickelt, deren Ablauf anhand der Figuren 3-1 bis 3-4 prinzipiell erläutert wird, wobei gleichzeitig die vorteilhaften Effekte bei der Verstellung des Fahrzeugsitzes 100 beziehungsweise der Sitzbank 100' erläutert werden.

Zur Umsetzung der Verstellkinematik ist der Fahrzeugsitz 100 beziehungsweise die Sitzbank 100' im Weiteren wie folgt ausgebildet:
Das Sitzteil 112 weist auf seiner vorderen Seite, die dem Rückenlehnenteil 114 in der normalen Gebrauchsposition des Fahrzeugsitzes 100 gegenüberliegt, mindestens einen Schwenkarm 118 auf, der an einem Ende sitzteilseitig an der Sitzteilstruktur über eine obere Schwenkachse y118a drehbar angeordnet ist. Am anderen Ende ist der Schwenkarm 118 drehbar über eine untere Schwenkachse y118b an einer Oberschiene 201 einer Sitzschiene 200 angeordnet, wobei die Sitzschiene 200 eine karosseriefeste Unterschiene 202 umfasst.

Zumeist sind zwei Schwenkarme 118 in y-Richtung nebeneinander liegend jeweils nahe der Vorderseite oder an der Vorderseite des Sitzteiles 112 angeordnet.

Der Fahrzeugsitz 100 ist auf mindestens einer Sitzschiene 200, zumeist jedoch aus einem aus zwei Sitzschienen 200 bestehenden Sitzschienenpaar längsverschieblich in +/-x-Richtung angeordnet.

Die Sitzoberschiene 201 ist gegenüber der Sitzunterschiene 202 beweglich, wobei die untere Sitzschiene 202 unbeweglich direkt an der Karosserie K oder indirekt an der Karosserie K befestigt ist.

Auf der Sitzoberschiene 201 ist der Schlitten 400 angeordnet.

Der Schlitten 400 umfasst einen Unterschlitten und einen Oberschlitten. Der Unterschlitten ist mit der Oberschiene 210 der zumeist beidseitig angeordneten Sitzschienen 200 verbunden. Je Sitzoberschiene 201 des Sitzschienenpaares ist je ein Unter- und Oberschlitten angeordnet.

In der Figur 3-1 befindet sich der Fahrzeugsitz 100 beziehungsweise die Sitzbank 100' in einer Ausgangsposition AP.

Erster Schritt: Verstellung des Fahrzeugsitzes 100 ausgehend von Figur 3-1 zu Figur 3-2:
Zunächst wird durch die Betätigung eines Entriegelungselementes 114A die Klappung des Rückenlehnenteiles 114 vorgenommen, wobei das Entriegelungselement 114A auf eine Rückenlehnenteil-Entriegelungseinheit 300 wirkt, wobei das Entriegelungselement 114A wegen der besseren Zugänglichkeit zumeist, wie in den Figuren dargestellt, im oberen Bereich des Rückenlehnenteiles 114 angeordnet ist.

In einem ersten Schritt kommt es zur Verstellung des Rückenlehnenteiles 114 nach vorn in +x-Richtung, wobei das Sitzteil 112 durch die zwischen der Rückenlehnenteilstruktur und der Sitzteilstruktur angeordnete Schwinge 116 in +x-Richtung mitgenommen wird.

Durch die Anordnung der Schwinge 116 erfolgt in dem ersten Schritt bei der Klappung des Rückenlehnenteiles 114 nach vorn eine schwingengesteuerte zwangsweise Mitnahme des Sitzteiles 112 nach vorn in +x-Richtung.

Das Rückenlehnenteil 114 wird, wie dargestellt, beispielsweise von der Ausgangsposition AP gegenüber einer gedachten Vertikalen nach vorne in +x-Richtung geschwenkt.

In der Ausgangsposition ist das Rückenlehnenteil 114 beispielsweise gegenüber einer gedachten Vertikalen um 25° nach hinten in -x-Richtung geneigt angeordnet.

Nach dem ersten Schritt ist das Rückenlehnenteil 114 beispielsweise um etwa 32° gegenüber einer gedachten Vertikalen um etwa 32° nach vorne in +x-Richtung geneigt angeordnet.

Es versteht sich, dass andere Schwenkwinkel realisierbar sind. Bei der Verstellbewegung des Rückenlehnenteiles 114 bewegt sich das Sitzteil 112 zwangsweise durch die Zwangskopplung der Schwinge 116 in +x-Richtung nach vorn. Das Sitzteil 112 wird in dem ersten Schritt über den mindestens einen Schwenkarm 118 über die obere und untere Schwenkachse y118a, y118b um eine erste Länge nach vorn in +x-Richtung verlagert. Eine Verlagerung des gesamten Fahrzeugsitzes 100 findet in diesem ersten Schritt jedoch noch nicht statt.

Nach der Durchführung des ersten Schrittes ist bereits im Schulterbereich ein erster Freiraum geschaffen, der im entsprechenden Türausschnitt das Durchreichen von Gegenständen in den Innenraum des Fahrzeuges oder aus dem Innenraum des Fahrzeuges heraus erlaubt.

Zweiter Schritt: Verstellung des Fahrzeugsitzes 100 ausgehend von Figur 3-2 zu Figur 3-3:
In dem zweiten Schritt bewegt sich jetzt der gesamte Fahrzeugsitz 100 nach vorne. Dabei bewegt sich der Fahrzeugsitz 110 insgesamt in +x-Richtung nach vorn. Dabei wird das Sitzteil 112 über den mindestens einen Schwenkarm 118 über die obere und untere Schwenkachse y118a, y118b um einen vorgebbaren vertikalen Verstellweg nach unten in Richtung der Karosserie K verlagert. Das heißt, das Sitzteil 112 taucht gemäß dem Pfeil P1 in Figur 3-3 gleichzeitig mit der ersten Verstellbewegung des Fahrzeugsitzes 100 in z-Richtung nach unten "Dive-Down" ab.

Diese erste Verstellbewegung mit paralleler Absenkung des Sitzteiles 112 findet durch Entriegelung des Oberschlittens gegenüber dem Unterschlitten statt. Die Entriegelung erfolgt über eine Schlittenentriegelungseinheit 500. Das heißt, der Oberschlitten fährt unter Beibehaltung der Ausgangslage des Unterschlittens, welcher auf der Oberschiene 201 der Sitzschiene 200 sitzt, in +x-Richtung um einen ersten Verstellweg nach vorne.

Dritter Schritt: Verstellung des Fahrzeugsitzes 100, ausgehend von Figur 3-3 zu Figur 3-4:
In dem dritten Schritt bewegt sich der gesamte Fahrzeugsitz 100 noch weiter nach vorne. Es wird dafür gesorgt, dass der Oberschlitten die Oberschiene 201 gegenüber der Unterschiene 202 entriegelt. Die Entriegelung erfolgt über eine Sitzschienenentriegelungseinheit 600.

Diese zweite Verstellbewegung, bei der keine weitere Absenkung des Sitzteiles 112 nach unten in z-Richtung stattfindet, wird durch Entriegelung der Oberschiene 201 gegenüber der Unterschiene 202 bewirkt. Da der Unterschlitten des Schlittens 400 auf der Oberschiene 201 der Sitzschiene 200 sitzt, fährt der Fahrzeugsitz 100 durch die Bewegung der Oberschiene 201 gegenüber der Unterschiene weiter in +x-Richtung um einen zweiten Verstellweg nach vorne.

Aus dieser vordersten Verstelllage des Fahrzeugsitzes 100, nachdem der Fahrzeugsitz 100 über beide Verstellwege verschoben worden ist, kann der Fahrzeugsitz 100 unter entsprechender Rückstellung der Komponenten der Verstellmechanik in seine ursprüngliche Ausgangslage gemäß den Figuren 1, Figur 3-1 und Figur 3-1A zurück verschoben werden.

In vorteilhafter Weise wird der Fahrzeugsitz 100 beziehungsweise die Sitzbank 100' erfindungsgemäß nicht nur nach vorne in die bekannte Easy-Entry-Position bewegt, sondern es findet eine reversible Bewegung des Fahrzeugsitzes 100 beziehungsweise der Sitzbank 100' in zwei Schritten (zwei Verstellbewegungen) sehr weit nach vorne in +/-x-Richtung und während der ersten Verstellbewegung findet auch eine Versenkbewegung des Sitzteiles 112 und des Rückenlehnenteiles 114 um den vertikalen Verstellweg nach unten in +/-z-Richtung statt, wodurch in vorteilhafter Weise der Einstiegsbereich durch die "Easy-Entry-Slide-Dive-Down"-Kinematik größer und damit die Zugänglichkeit zum Innenraum in die zweite oder dritte Sitzreihe wesentlich verbessert wird.

Es versteht sich, dass das Rückenlehnenteil 114 ausgehend von der Figur 3-4 vollständig auf das Sitzteil 112 in eine Cargoposition klappbar ist, bei der das Rückenlehnenteil 114 und das Sitzteil 112 horizontal angeordnet sind, so dass die Rückseite des Rückenlehnenteiles 114 eine Ablagefläche bildet.

Die vorhergehenden Erläuterungen zu dem Fahrzeugsitz 100 sind somit analog auf eine ungeteilte Sitzbank 100' insgesamt oder auf eine aus mehreren Fahrzeugsitzen 100 bestehende mehrteilige Sitzbank 100' übertragbar.

Die Figur 4 zeigt beispielhaft eine aus mehreren Fahrzeugsitzen 100 bestehende mehrteilige Sitzbank 100'.

Die Figur 4 zeigt eine Hintersitzanlage 100', die mit der in den Figuren 1 bis 3-4 dargestellten und beschriebenen Verstellkinematik ausgestattet ist.

Die Hintersitzanlage 100' umfasst ein 40%-Rückenlehnenteil 114-40 und ein 60%-Rückenlehnenteil 114-60. Das 60%-Rückenlehnenteil 114-60 umfasst eine 20%-Rückenlehne und eine 40%-Rückenlehne. Die 20%-Rückenlehne ist komfortabel mit einer Mittelarmlehne 700 ausgestattet.

Die Figuren 4 und 8 zeigen jeweils das 60%-Rückenlehnenteil 114-60 der Hintersitzanlage 100', welche die 20%-Rückenlehne die 40%-Rückenlehne umfasst, wobei die Figuren 4 bis 7 eine Seitenansicht auf die 40%-Rückenlehne, an das sich die 20%-Rückenlehne anschließt.

Die Figur 8 zeigt das 60%-Rückenlehnenteil 114-60 der Hintersitzanlage 100' in einer perspektivischen Ansicht.

Das 60%-Rückenlehnenteil 114-60 umfasst eine sogenannte Towelbar, ein Entriegelungsbügel 203, der zur Entriegelung der Oberschiene 201 gegenüber der Unterschiene 202 dient. Eine Bewegung des Entriegelungsbügels 203 nach oben in z-Richtung führt zur Entriegelung der Oberschiene 201, so dass der Fahrzeugsitz 100 unabhängig von der Easy-Entry-Funktion in x-Richtung reversibel verschoben werden kann.

Die Figur 5 zeigt die Mittelarmlehne 700 in einer Verstelllage in der in der vorhergehenden Beschreibung definierten Ausgangsposition AP des Rückenlehnenteiles 114.

Die Figur 6 zeigt die Mittelarmlehne 700 in einer unerwünschten Verstelllage nach der Neigungsverstellung des 60%-Rückenlehnenteiles 114-60 in eine Komfortposition KP des 60%-Rückenlehnenteiles 114-60. Die Mittelarmlehne 700 kommt durch die Neigungsverstellung des 60%-Rückenlehnenteiles 114-60 in die Komfortposition KP in eine Verstelllage, bei der die Mittelarmlehne 700 nicht mehr in einer horizontalen Position angeordnet ist. Diese Verstelllage wird von einem Benutzer als unkomfortabel empfunden.

Die Figur 7 zeigt die erfindungsgemäße Mittelarmlehne 700 gemäß den vorhergehenden Figuren in einer erwünschten Verstelllage, die erfindungsgemäß während der Neigungsverstellung des 60%-Rückenlehnenteiles 114-60 in die Komfortposition KP erreicht wird. Die erwünschte Verstelllage wird auch als Synchronisierte Verstelllage der Mittelarmlehne 700 bezeichnet. Die Mittelarmlehne 700 ist in der Synchronisierten Verstelllage in einer Verstelllage angeordnet, bei der die Mittelarmlehne 700 in einer horizontalen Position angeordnet ist. Diese horizontale Verstelllage der Mittelarmlehne 700 in der Komfortposition KP des 60%-Rückenlehnenteil 114-60 wird von einem Benutzer als komfortabel empfunden.

Für die zuvor beschriebenen Hintersitzanlagen 100', die mit einer Schwinge 116 ausgestattet sind, wird zur Synchronisation der Verstelllage der Mittelarmlehne 700 in Abhängigkeit der Neigung des 60%-Rückenlehnenteiles 114-60 zwischen der Ausgangsposition AP und der Komfortposition KP ein Synchronisationsmechanismus 800 geschaffen, der gemäß den Figuren 9 und 10 wie folgt funktioniert und ausgebildet ist. Der Synchronisationsmechanismus 800 wird im nachfolgenden Text kurz als Mechanismus 800 bezeichnet.

Die Figur 9 zeigt den Mechanismus 800 zwischen dem 60%-Rückenlehnenteil 114-60 und der Mittelarmlehne 700 in der Ausgangsposition AP des 60%-Rückenlehnenteiles 114-60.

Der Mechanismus 800 umfasst einen während der Neigungsverstellung des 60%-Rückenlehnenteiles 114-60 lagestabilen Mitnehmer 816, der an einem Auslöseelement angeordnet ist. Das Auslöseelement ist an einer während der Neigungsverstellung des 60%-Rückenlehnenteiles 114-60 unbeweglichen Struktur des Fahrzeugsitzes 100 beziehungsweise der Hintersitzanlage 100' angeordnet.

Bei den zuvor beschriebenen "Dive-Down"-Fahrzeugsitzen 100 beziehungsweise Sitzanlagen 100' ist mindestens eine Schwinge 116 ausgebildet, die im beschriebenen Ausführungsbeispiel als Auslöseelement dient.

Die Figur 8 zeigt die beiden beidseitig angeordneten Schwingen 116 für das 60%-Rückenlehnenteil 114-60 der Hintersitzanlage 100'.

Die Schwinge 116, die an einem der beiden Lehnenholme 60 des 60%-Rückenlehnenteil 114-60 angeordnet ist, wird mit dem Mitnehmer 816 versehen.

Die Schwinge 116 ist über die Schwingendrehachse y116 drehbeweglich an dem Lehnenholm 60 angeordnet, um die bereits erläuterte "Dive-Down-Funktion" zu ermöglichen, jedoch ist die Schwinge 116 während der Neigungsverstellung des 60%-Rückenlehnenteiles 114-60 unbeweglich. Dadurch kann die Schwinge 116 in vorteilhafter Weise im Ausführungsbeispiel nicht nur für die "Dive-Down-Funktion" der "Dive-Down"-Fahrzeugsitze 100 beziehungsweise Sitzanlagen 100' genutzt werden, sondern auch als Auslöseelement für den Mechanismus 800 dienen.

Der Mitnehmer 816 der Schwinge 116 greift mit seiner Mitnehmerflanke in der Ausgangsposition AP des 60%-Rückenlehnenteiles 114-60 gemäß Figur 9 an einem Klinkenbolzen 821 einer Klinke 820 an. Die Klinke 820 ist auf einer Klinkendrehachse y820 drehbeweglich an dem Lehnenholm 60 gelagert. Bevorzugt ist vorgesehen, dass der Klinkenbolzen 821 den Lehnenholm 60 in y-Richtung durchgreift, so dass die Klinke 820 auf der Innenseite des Lehnenholmes 60 angeordnet werden kann. Der Klinkenbolzen 821 durchgreift den Lehnenholm 60 in y-Richtung, wobei die Durchtrittsöffnung durch den Lehnenholm 60 als Langloch 822 ausgebildet ist.

In der Ausgangsposition AP des 60%-Rückenlehnenteil 114-60 gemäß Figur 9 bildet der Klinkenbolzen 821 in dem Langloch 822 einen linken Endanschlag und die Mitnehmerflanke des Mitnehmers 816 liegt an dem Klinkenbolzen 821 an. Der Klinkenbolzen 821 ist in einem ersten Schenkel der Klinke 820 angeordnet. An einem zweiten Schenkel der Klinke 820 ist mit seinem ersten Ende ein Übertragungselement 830 angeordnet, welches eine Übertragungsstange oder ein Übertragungsseil oder dergleichen mit vorgebbarer definierter Länge ist. Das zweite Ende des Übertragungselementes 830 greift an einem drehbeweglich Anschlag 840 an, der drehbeweglich auf einer Anschlagsdrehachse y840 an dem Lehnenholm 60 gelagert ist.

Das Übertragungselement 830 und der Anschlag 840 sind ebenfalls auf der Innenseite des Lehnenholmes 60 angeordnet.

Der Anschlag 840 weist eine Anschlagskulisse 841 auf. In der Ausgangsposition AP des 60%-Rückenlehnenteil 114-60 liegt ein endseitig der Mittelarmlehne 700 angeordnetes Endanschlagselement 710, insbesondere ein Endanschlagsbolzen in der Anschlagskulisse 841. In der Figur 9 ist sichtbar, dass der Endanschlagsbolzen 710 der Mittelarmlehne 700 unterhalb einer Haltekulisse 851 eines Halteelementes 850 liegt.

Das Halteelement 850 stellt ein festes mit dem Lehnenholm 60 verbundenes Bauteil dar, in welchem die Mittelarmlehne 700 über die Mittelarmlehnenschwenkachse y700 von einer in der 20%-Rückenlehne des 60%-Rückenlehnenteil 114-60 versenkten Verstelllage (Nichtgebrauchslage) in die horizontale Verstelllage (Gebrauchslage) schwenkbar ist.

In der Ausgangsposition AP ist das 60%-Rückenlehnenteil 114-60 beispielsweise um die bereits erwähnten etwa 25° gegenüber einer gedachten Vertikalen nach hinten in -x-Richtung geneigt angeordnet, während sich die Mittelarmlehne 700 in Figur 9 in horizontaler Verstelllage (Gebrauchslage) befindet. In dieser horizontalen Verstelllage hält der Endanschlagsbolzen 710 die Mittelarmlehne 700 in dem Halteelement 850 in horizontaler Position. Ein weiteres Absinken der Mittelarmlehne 700 nach unten ist nicht möglich, da die Anschlagskulisse 841 des Anschlages 840 ein Absinken verhindert, da der Endanschlagsbolzen 710 in der Anschlagskulisse 841 anschlägt.

Bei der Neigungsverstellung des 60%-Rückenlehnenteiles 114-60 in die Komfortposition KP, bei der das 60%-Rückenlehnenteil 114-60 gegenüber einer gedachten Vertikalen um etwa 32° nach hinten in -x-Richtung geneigt ist, wird ein Absinken der Mittelarmlehne 700 erreicht, wie der Pfeil oberhalb der Mittelarmlehne 700 in Figur 10 verdeutlicht.

Durch die Relativbewegung des 60%-Rückenlehnenteiles 114-60 gegenüber der Mitnehmerflanke des Mitnehmers 816 der Schwinge 116, während der reversiblen Neigungsverstellung von der Ausgangsposition AP in die Komfortposition KP des 60%-Rückenlehnenteiles 114-60, wird Synchron über den Mechanismus 800 das Absenken oder Anheben der Mittelarmlehne 700 erreicht.

Gemäß den Figuren 9 und 10 erfolgt während der Neigungsverstellung des 60%-Rückenlehnenteiles 114-60 beim Übergang von der Ausgangsposition AP in die Komfortposition KP ein Synchrones Absinken der Mittelarmlehne 700, da die Mitnehmerflanke des Mitnehmers 816 der Schwinge 116 den Klinkenbolzen 821 der Klinke 820 in seiner ursprünglichen Position hält, das heißt der Klinkenbolzen 821 kann sich nicht mit dem 60%-Rückenlehnenteil 114-60 mitbewegen, wodurch es zu einer Schwenkbewegung der Klinke 820 gegenüber dem Lehnenholm 60 des 60%-Rückenlehnenteiles 114-60 entgegen der Uhrzeigerrichtung kommt.

Infolgedessen schwenkt der Anschlag 840 um seine Anschlagsdrehachse y840 entgegen der Uhrzeigerrichtung, da das Übertragungselement 830 die Schwenkbewegung der Klinke 820 auf den Anschlag 840 mechanisch überträgt.

Die mechanische Übertragung zwischen Klinke 820 und Anschlag 840 erfolgt, wie in Figur 10 verdeutlicht ist, solange bis der Klinkenbolzen 821 in dem Langloch 822 einen rechten Endanschlag findet, so dass die Mitnehmerflanke des Mitnehmers 816 den Klinkenbolzen 821 an den rechten Endanschlag des Langloches 822 drückt.

Während der mechanischen Übertragung kommt es somit zu einem stetigen Synchronen Verschwenken des Anschlages um die Anschlagsdrehachse y840, wodurch sich die Anschlagskulisse 841 hebt. Dadurch kann der Endanschlagsbolzen 710 der Mittelarmlehne 700 ebenfalls gemäß dem Pfeil in Figur 10 nach oben ausweichen, wodurch die Mittelarmlehne 700 um die Mittelarmlehnenschwenkachse y700 nach unten abgesenkt wird. Der Endanschlagsbolzen 710 der Mittelarmlehne 700 kann dabei nur solange nach oben ausweichen beziehungsweise die Mittelarmlehne 700 kann nur solange nach unten geschwenkt werden, bis der Endanschlagsbolzen 710 der Mittelarmlehne 700 in der Haltekulisse 851 in seinen Endanschlag kommt.

Es versteht sich, dass das Absenken der Mittelarmlehne 700 durch die Bewegung des 60%-Rückenlehnenteiles 114-60 durch das Anheben der Mittelarmlehne 700 überlagert wird, da die Neigungsverstellung des 60%-Rückenlehnenteiles 114-60 gleichzeitig mit dem Absenken der Mittelarmlehne 700 ein Anheben der Mittelarmlehne 700 hervorruft. Diese gegenläufigen Bewegungen werden innerhalb des Mechanismus ausgeglichen, so dass die Mittelarmlehne 700 in der Figur 10 gezeigten Komfortposition KP, bei der das 60%-Rückenlehnenteil 114-60 gegenüber einer gedachten Vertikalen um etwa 32° nach hinten in -x-Richtung geneigt ist, horizontal angeordnet ist.

Bei einer Verstellung des 60%-Rückenlehnenteiles 114-60 von der Komfortposition gemäß Figur 10, in die Ausgangsposition AP gemäß Figur 9, läuft die mechanische Übertragung umgekehrt ab und beginnt damit, dass der rechte Endanschlag des Langloches 822 den Klinkenbolzen 821 der Klinke 820 bis zum linken Endanschlag des Langloches 822 mitnimmt.

Über die sich jetzt gegenüber dem Lehnenholm 60 in Uhrzeigerrichtung drehende Klinke 820, das Übertragungselement 830 und den Anschlag 840, der sich schließlich in Uhrzeigerrichtung dreht, wird der Endanschlagsbolzen 710 aus der Haltekulisse 851 gedrängt, bis er am Ende des mechanischen Verstellvorganges wieder in der Anschlagskulisse 841 liegt.

### Bezugszeichenliste

- 100: Fahrzeugsitz
- 100': Sitzbank, Hintersitzanlage
- 112: Sitzteil
- 114: Rückenlehnenteil
- y114: Lehnendrehachse
- 114-40: 40%-Rückenlehnenteil
- 114-60: 60%-Rückenlehnenteil
- 60: Lehnenholm des 60%-Rückenlehnenteiles
- 114A: Entriegelungselement
- 116: Schwinge
- y116: Schwingendrehachse
- 118: Schwenkarm
- y118a: obere Schwenkachse
- y118b: untere Schwenkachse
- 200: Sitzschiene
- 201: Oberschiene
- 202: Unterschiene
- 203: Entriegelungsbügel
- 300: Rückenlehnenteil-Entriegelungseinheit
- 400: Schlitten
- 500: Schlittenentriegelungseinheit
- 600: Sitzschienenentriegelungseinheit
- 700: Armlehne/Mittelarmlehne
- y700: Mittelarmlehnenschwenkachse
- 710: Endanschlagselement
- 800: Mechanismus
- 816: Mitnehmer
- 820: Klinke
- 821: Klinkenbolzen
- 822: Langloch
- y820: Klinkendrehachse
- 830: Übertragungselement
- 840: Anschlag
- y840: Anschlagsdrehachse
- 841: Anschlagskulisse
- 850: Halteelement
- 851: Haltekulisse
- K: Karosserie
- +x: Richtung in der üblichen Fahrtrichtung eines Fahrzeugs
- -x: Richtung entgegen der üblichen Fahrtrichtung +x
- y: Richtung in der Horizontalen quer zur x-Richtung
- z: Richtung in der Vertikalen quer zur x-Richtung
- AP: Ausgangsposition
- KP: Komfortposition
- P1: Absenkung des Sitzteiles 112 in z-Richtung nach unten

## Patentansprüche

1. Fahrzeugsitz (100) oder Sitzbank (100') umfassend mindestens ein gegenüber mindestens einem Sitzteil (112) aus einer Ausgangsposition (AP) reversibel in eine Komfortposition (KP) neigungsverstellbares Rückenlehnenteil (114; 114-40, 114-60), an dem mindestens eine Armlehne (700) angeordnet ist, die in der Ausgangsposition (AP) des mindestens einen Rückenlehnenteiles (114; 114-40, 114-60) in einer im Wesentlichen horizontalen Position angeordnet ist, wobei dem mindestens einen neigungsverstellbaren Rückenlehnenteil (114; 114-40, 114-60) ein zumindest während der Neigungsverstellung lagestabiles, indirekt oder direkt mit einer Karosserie (K) in Verbindung stehendes Auslöseelement (116) zugeordnet ist, welches auf einen zwischen dem mindestens einen Rückenlehnenteil (114; 114-40, 114-60) und der mindestens einen Armlehne (700) angeordneten Synchronisationsmechanismus (800) wirkt, wobei der Synchronisationsmechanismus (800) während der reversiblen Neigungsverstellung des mindestens einen Rückenlehnenteiles (114; 114-40, 114-60) von der Ausgangsposition (AP) in die Komfortposition (KP) eine unveränderte horizontale Position der Armlehne (700) um eine Mittelarmlehnenschwenkachse (y700) bewirkt, wobei die Armlehne (700) über die Mittelarmlehnenschwenkachse (y700) von einer in dem mindestens einen Rückenlehnenteil (114; 114-40, 114-60) versenkten Verstelllage in die horizontale Verstelllage schwenkbar ist, bei der sich die Armlehne (700) in der horizontalen Position befindet, **dadurch gekennzeichnet, dass**
das Auslöseelement (116) einen Mitnehmer (816) aufweist, der in der Ausgangsposition (AP) des mindestens einen Rückenlehnenteiles (114; 114-40, 114-60) mit seiner Mitnehmerflanke an einem Klinkenbolzen (821) einer Klinke (820) angreift, die drehbeweglich an einem Lehnenholm (60) des mindestens einen Rückenlehnenteiles (114; 114-40, 114-60) angeordnet ist, wobei die Klinke (820) mit einem Ende eines Übertragungselementes (830) drehbeweglich in Verbindung steht, welches mit seinem anderen Ende an einem drehbeweglich an dem Lehnenholm (60) des mindestens einen Rückenlehnenteiles (114; 114-40, 114-60) angeordneten Anschlag (840) drehbeweglich verbunden ist, der eine Anschlagskulisse (841) aufweist, in der ein Endanschlagselement (710) der Armlehne (700) anschlägt und die Armlehne (700) in der Ausgangsposition (AP) des mindestens einen Rückenlehnenteiles (114; 114-40, 114-60) in der horizontalen Position hält.

2. Fahrzeugsitz (100) oder Sitzbank (100') nach Anspruch 1, **dadurch gekennzeichnet, dass** die Armlehne (700) über ein Halteelement (850) an der Struktur des mindestens einen Rückenlehnenteiles (114; 114-40, 114-60) gehalten ist, welches eine Halteelementkulisse (851) aufweist, in der das Endanschlagselement (710) der Armlehne (700) anschlägt und die Armlehne (700) in der Komfortposition (KP) des mindestens einen Rückenlehnenteiles (114; 114-40, 114-60) in der horizontalen Position hält.

3. Fahrzeugsitz (100) oder Sitzbank (100') nach Anspruch 2, **dadurch gekennzeichnet, dass** das Endanschlagselement (710) der Armlehne (700) aus der Anschlagskulisse (841) in die Halteelementkulisse (851) kommt, sobald der Mitnehmer (816) des lagestabilen Auslöseelementes (116), bei der Relativbewegung des mindestens einen Rückenlehnenteiles (114; 114-40, 114-60) gegenüber dem Mitnehmer (816) über den Klinkenbolzen (821) der Klinke (820) für eine Drehbewegung der Klinke (820) und gleichzeitig für eine translatorische Bewegung des Übertragungselementes (830) sorgt, welches eine Drehbewegung des Anschlages (840) hervorruft, dessen Anschlagskulisse (841) das Endanschlagselement (710) durch die Drehbewegung des Anschlages (840) frei gibt, wodurch das Endanschlagselement (710) schließlich in die Halteelementkulisse (851) des Halteelementes (850) eingreift.

4. Fahrzeugsitz (100) oder Sitzbank (100') nach mindestens einem der Ansprüche 2 bis 3, **dadurch gekennzeichnet, dass** die Klinke (820), das Übertragungselement (830), der Anschlag (840) und das Halteelement (850) auf der Innenseite des Lehnenholmes (60) der Struktur des mindestens einen Rückenlehnenteiles (114; 114-40, 114-60) angeordnet sind.

5. Fahrzeugsitz (100) oder Sitzbank (100') nach mindestens einem der Ansprüche 2 bis 3, **dadurch gekennzeichnet, dass** das Auslöseelement (116) mit dem Mitnehmer (816) auf der Außenseite des Lehnenholmes (60) der Struktur des mindestens einen Rückenlehnenteiles (114; 114-40, 114-60) angeordnet ist.

6. Fahrzeugsitz (100) oder Sitzbank (100') nach mindestens einem der Ansprüche 2 bis 3, **dadurch gekennzeichnet, dass** die Klinke (820) einen Klinkenbolzen (821) aufweist, der den Lehnenholm (60) der Struktur des mindestens einen Rückenlehnenteiles (114; 114-40, 114-60) durchgreift, wobei die Durchtrittsöffnung als Langloch (822) in einer Wandung des Lehnenholmes (60) ausgestaltet ist, das bei der reversiblen Neigungsverstellung des mindestens einen Rückenlehnenteiles (114; 114-40, 114-60) eine Bewegung des Klinkenbolzens (821) der Klinke (820) von einem Endanschlag zu einem gegenüberliegenden Endanschlag der Armlehne (700) erlaubt, wobei der jeweilige Anschlag durch die vorgebbare Länge des Langloches (822) einmal der Ausgangsposition (AP) und einmal der Komfortposition (KP) des mindestens einen Rückenlehnenteiles (114; 114-40, 114-60) entspricht, so dass die Bewegung des Klinkenbolzens (821) der Klinke (820) über den Mitnehmer (816) für eine Synchronisierte Drehbewegung der Klinke (820), eine Synchronisierte translatorische Bewegung des Übertragungselementes (830) und für eine Synchronisierte Drehbewegung des Anschlages (840) sorgt, dessen Anschlagskulisse (841) das Endanschlagselement (710) der Armlehne (700) durch die Drehbewegung des Anschlages (840) frei gibt, wodurch das Endanschlagselement (710) der Armlehne (700) Synchron mit dem Erreichen der Komfortposition (KP) des mindestens einen Rückenlehnenteiles (114; 114-40, 114-60) schließlich in die Halteelementkulisse (851) des Halteelementes (850) eingreift.

7. Fahrzeugsitz (100) oder Sitzbank (100') nach Anspruch 1, **dadurch gekennzeichnet, dass** das Auslöseelement ein Koppelelement, in der Art einer Schwinge (116) eines Verstellmechanismus einer Verstellkinematik ist, bei dem die Schwinge (116) zwischen dem Rückenlehnenteil (114; 114-40, 114-60) und dem karosseriefesten Sitzteil (112) drehbeweglich an dem mindestens einen Rückenlehnenteil (114; 114-40, 114-60) angeordnet ist, die unabhängig von der reversiblen Neigungsverstellung des mindestens einen Rückenlehnenteiles (114; 114-40, 114-60) von der Ausgangsposition (AP) in die Komfortposition (KP) zwangsgekoppelt eine reversible Verstellbewegung des mindestens einen Rückenlehnenteiles (114; 114-40, 114-60) auf das karosseriefeste Sitzteil (112) überträgt.

## Claims

1. Vehicle seat (100) or seat bench (100') comprising at least one backrest part (114; 114-40, 114-60) which is adjustable in inclination in relation to at least one seat part (112) reversibly from a starting position (AP) into a comfort position (KP) and on which at least one armrest (700) is arranged, said armrest being arranged in a substantially horizontal position in the starting position (AP) of the at least one backrest part (114; 114-40, 114-60), wherein the at least one inclination-adjustable backrest part (114; 114-40, 114-60) is assigned a triggering element (116) which is positionally stable at least during the inclination adjustment, is connected indirectly or directly to a vehicle body (K) and acts on a synchronization mechanism (800) arranged between the at least one backrest part (114; 114-40, 114-60) and the at least one armrest (700), wherein, during the reversible inclination adjustment of the at least one backrest part (114; 114-40, 114-60) from the starting position (AP) into the comfort position (KP), the synchronization mechanism (800) brings about an unchanged horizontal position of the armrest (700) about a central armrest pivot axis (y700), wherein the armrest (700) is pivotable via the central armrest pivot axis (y700) from an adjustment position recessed in the at least one backrest part (114; 114-40, 114-60) into the horizontal adjustment position in which the armrest (700) is in the horizontal position, **characterized in that** the triggering element (116) has a driver (816) which, in the starting position (AP) of the at least one backrest part (114; 114-40, 114-60), engages by means of its driver flank on a catch pin (821) of a catch (820), which is arranged rotatably on a backrest strut (60) of the at least one backrest part (114; 114-40, 114-60), wherein the catch (820) is connected rotatably to one end of a transmission element (830) which is rotatably connected at its other end to a stop (840) which is arranged rotatably on the backrest strut (60) of the at least one backrest part (114; 114-40, 114-60) and has a stop slot (841) in which an end stop element (710) of the armrest (700) strikes and holds the armrest (700) in the horizontal position in the starting position (AP) of the at least one backrest part (114; 114-40, 114-60).

2. Vehicle seat (100) or seat bench (100') according to Claim 1, **characterized in that** the armrest (700) is held on the structure of the at least one backrest part (114; 114-40, 114-60) via a holding element (850) which has a holding element slot (851) in which the end stop element (710) of the armrest (700) strikes and holds the armrest (700) in the horizontal position in the comfort position (KP) of the at least one backrest part (114; 114-40, 114-60).

3. Vehicle seat (100) or seat bench (100') according to Claim 2, **characterized in that** the end stop element (710) of the armrest (700) comes out of the stop slot (841) into the holding element slot (851) as soon as the driver (816) of the positionally stable triggering element (116), during the relative movement of the at least one backrest part (114; 114-40, 114-60) in relation to the driver (816), ensures, via the catch pin (821) of the catch (820), a rotational movement of the catch (820) and at the same time a translatory movement of the transmission element (830) which brings about a rotational movement of the stop (840), the stop slot (841) of which releases the end stop element (710) by means of the rotational movement of the stop (840), as a result of which the end stop element (710) finally engages in the holding element slot (851) of the holding element (850).

4. Vehicle seat (100) or seat bench (100') according to at least either of Claims 2 and 3, **characterized in that** the catch (820), the transmission element (830), the stop (840) and the holding element (850) are arranged on the inner side of the backrest strut (60) of the structure of the at least one backrest part (114; 114-40, 114-60).

5. Vehicle seat (100) or seat bench (100') according to at least either of Claims 2 and 3, **characterized in that** the triggering element (116) is arranged with the driver (816) on the outer side of the backrest strut (60) of the structure of the at least one backrest part (114; 114-40, 114-60).

6. Vehicle seat (100) or seat bench (100') according to at least either of Claims 2 and 3, **characterized in that** the catch (820) has a catch pin (821) which reaches through the backrest strut (60) of the structure of the at least one backrest part (114; 114-40, 114-60), wherein the through opening is configured as an elongated hole (822) in a wall of the backrest strut (60), said elongated hole permitting a movement of the catch pin (821) of the catch (820) from one end stop to an opposite end stop of the armrest (700) during the reversible inclination adjustment of the at least one backrest part (114; 114-40, 114-60), wherein the predeterminable length of the elongated hole (822) means that the respective stop corresponds firstly to the starting position (AP) and secondly to the comfort position (KP) of the at least one backrest part (114; 114-40, 114-60), and therefore the movement of the catch pin (821) of the catch (820) via the driver (816) ensures a synchronized rotational movement of the catch (820), a synchronized translatory movement of the transmission element (830) and a synchronized rotational movement of the stop (840), the stop slot (841) of which releases the end stop element (710) of the armrest (700) by means of the rotational movement of the stop (840), as a result of which the end stop element (710) of the armrest (700) finally engages in the holding element slot (851) of the holding element (850) synchronously with the reaching of the comfort position (KP) of the at least one backrest part (114; 114-40, 114-60).

7. Vehicle seat (100) or seat bench (100') according to Claim 1, **characterized in that** the triggering element is a coupling element in the manner of a rocker (116) of an adjustment mechanism of adjustment kinematics, in which the rocker (116) is arranged on the at least one backrest part (114; 114-40, 114-60) so as to be rotatable between the backrest part (114; 114-40, 114-60) and the body-mounted seat part (112), said rocker with forcible coupling transmitting a reversible adjustment movement of the at least one backrest part (114; 114-40, 114-60) to the body-mounted seat part (112) independently of the reversible inclination adjustment of the at least one backrest part (114; 114-40, 114-60) from the starting position (AP) into the comfort position (KP).

## Revendications

1. Siège de véhicule (100) ou banquette de sièges (100'), comprenant au moins une partie de dossier (114 ; 114-40, 114-60) d'inclinaison réglable par rapport à au moins une partie de siège (112) de manière réversible d'une position initiale (AP) à une position de confort (KP), au niveau de laquelle est disposé au moins un accoudoir (700) qui est disposé dans une position essentiellement horizontale dans la position initiale (AP) de l'au moins une partie de dossier (114 ; 114-40, 114-60), à l'au moins une partie de dossier (114 ; 114-40, 114-60) d'inclinaison réglable étant associé un élément de déclenchement (116) ayant une position stable au moins pendant le réglage d'inclinaison, en liaison directe ou indirecte avec une carrosserie (K), lequel agit sur un mécanisme de synchronisation (800) disposé entre l'au moins une partie de dossier (114 ; 114-40, 114-60) et l'au moins un accoudoir (700), le mécanisme de synchronisation (800), pendant le réglage d'inclinaison réversible de l'au moins une partie de dossier (114 ; 114-40, 114-60) de la position initiale (AP) à la position de confort (KP), produisant une position horizontale inchangée de l'accoudoir (700) autour d'un axe de pivotement d'accoudoir central (y700), l'accoudoir (700) pouvant pivoter par le biais de l'axe de pivotement d'accoudoir central (y700) d'une position de réglage renfoncée dans l'au moins une partie de dossier (114 ; 114-40, 114-60) à la position de réglage horizontale à laquelle l'accoudoir (700) se trouve dans la position horizontale,
caractérisé(e) en ce que
l'élément de déclenchement (116) présente un dispositif d'entraînement (816) qui, dans la position initiale (AP) de l'au moins une partie de dossier (114 ; 114-40, 114-60), vient en prise avec son flanc d'entraînement avec un boulon de cliquet (821) d'un cliquet (820) qui est disposé de manière mobile en rotation au niveau d'un montant de dossier (60) de l'au moins une partie de dossier (114 ; 114-40, 114-60), le cliquet (820) étant en liaison mobile en rotation avec une extrémité d'un élément de transfert (830) qui est relié de manière mobile en rotation par son autre extrémité à une butée (840) disposée de manière mobile en rotation sur le montant de dossier (60) de l'au moins une partie de dossier (114 ; 114-40, 114-60), laquelle présente une coulisse de butée (841), dans laquelle bute un élément de butée de fin de course (710) de l'accoudoir (700), et maintient l'accoudoir (700) dans la position horizontale dans la position initiale (AP) de l'au moins une partie de dossier (114 ; 114-40, 114-60).

2. Siège de véhicule (100) ou banquette de sièges (100') selon la revendication 1, caractérisé(e) en ce que l'accoudoir (700) est retenu par le biais d'un élément de retenue (850) à la structure de l'au moins une partie de dossier (114 ; 114-40, 114-60), lequel présente une coulisse d'élément de retenue (851), dans laquelle bute l'élément de butée de fin de course (710) de l'accoudoir (700), et retient l'accoudoir (700) dans la position horizontale dans la position de confort (KP) de l'au moins une partie de dossier (114 ; 114-40, 114-60).

3. Siège de véhicule (100) ou banquette de sièges (100') selon la revendication 2, caractérisé(e) en ce que l'élément de butée de fin de course (710) de l'accoudoir (700) sort de la coulisse de butée (841) pour entrer dans la coulisse d'élément de retenue (851) dès que le dispositif d'entraînement (816) de l'élément de déclenchement à position stable (116), lors du mouvement relatif de l'au moins une partie de dossier (114 ; 114-40, 114-60) par rapport au dispositif d'entraînement (816), assure, par le biais du boulon de cliquet (821) du cliquet (820), un mouvement de rotation du cliquet (820) et simultanément un déplacement en translation de l'élément de transfert (830), qui provoque un mouvement de rotation de la butée (840) dont la coulisse de butée (841) libère l'élément de butée de fin de course (710) par le mouvement de rotation de la butée (840), de sorte que l'élément de butée de fin de course (710) s'engage finalement dans la coulisse d'élément de retenue (851) de l'élément de retenue (850).

4. Siège de véhicule (100) ou banquette de sièges (100') selon au moins l'une quelconque des revendications 2 et 3, caractérisé(e) en ce que le cliquet (820), l'élément de transfert (830), la butée (840) et l'élément de retenue (850) sont disposés sur le côté intérieur du montant de dossier (60) de la structure de l'au moins une partie de dossier (114 ; 114-40, 114-60).

5. Siège de véhicule (100) ou banquette de sièges (100') selon au moins l'une quelconque des revendications 2 et 3, caractérisé(e) en ce que l'élément de déclenchement (116) est disposé avec le dispositif d'entraînement (816) sur le côté extérieur du montant de dossier (60) de la structure de l'au moins une partie de dossier (114 ; 114-40, 114-60).

6. Siège de véhicule (100) ou banquette de sièges (100') selon au moins l'une quelconque des revendications 2 et 3, caractérisé(e) en ce que le cliquet (820) présente un boulon de cliquet (821) qui vient en prise à travers le montant de dossier (60) de la structure de l'au moins une partie de dossier (114 ; 114-40, 114-60), l'ouverture de passage étant réalisée sous forme de trou oblong (822) dans une paroi du montant de dossier (60), lequel, lors du réglage d'inclinaison réversible de l'au moins une partie de dossier (114 ; 114-40, 114-60), permet un déplacement du boulon de cliquet (821) du cliquet (820) d'une butée de fin de course à une butée de fin de course opposée de l'accoudoir (700), la butée respective correspondant, par la longueur prédéfinissable du trou oblong (822), dans un cas à la position initiale (AP) et dans l'autre cas à la position de confort (KP) de l'au moins une partie de dossier (114 ; 114-40, 114-60), de telle sorte que le déplacement du boulon de cliquet (821) du cliquet (820), par le biais du dispositif d'entraînement (816), assure un mouvement de rotation synchronisé du cliquet (820), un mouvement de translation synchronisé de l'élément de transfert (830) et un mouvement de rotation synchronisé de la butée (840) dont la coulisse de butée (841) libère l'élément de butée de fin de course (710) de l'accoudoir (700) par le mouvement de rotation de la butée (840), de telle sorte que l'élément de butée de fin de course (710) de l'accoudoir (700), de manière synchronisée avec l'arrivée dans la position de confort (KP) de l'au moins une partie de dossier (114 ; 114-40, 114-60), s'engage finalement dans la coulisse d'élément de retenue (851) de l'élément de retenue (850).

7. Siège de véhicule (100) ou banquette de sièges (100') selon la revendication 1, caractérisé(e) en ce que l'élément de déclenchement est un élément d'accouplement à la manière d'une bielle (116) d'un mécanisme de réglage d'une cinématique de réglage, la bielle (116) étant disposée, entre la partie de dossier (114 ; 114-40, 114-60) et la partie de siège (112) fixée à la carrosserie, de manière mobile en rotation sur l'au moins une partie de dossier (114 ; 114-40, 114-60), laquelle bielle, indépendamment du réglage d'inclinaison réversible de l'au moins une partie de dossier (114 ; 114-40, 114-60) de la position initiale (AP) à la position de confort (KP), transmet par accouplement forcé un mouvement de réglage réversible de l'au moins une partie de dossier (114 ; 114-40, 114-60) à la partie de siège (112) fixée à la carrosserie.
